# EUROPÄISCHE PATENTSCHRIFT

(11) **EP 3 479 058 B1**
(45) Veröffentlichungstag und Bekanntmachung des Hinweises auf die Patenterteilung: **22.10.2025**
(21) Anmeldenummer: 18746569.5
(22) Anmeldetag: 19.06.2018
(51) Int. Cl.: G01N 21/95, G01N 21/88, G01N 21/84, G01B 11/25

(54) **VERFAHREN UND VORRICHTUNG ZUR VERMESSUNG VON KAROSSERIESCHÄDEN**
METHOD AND DEVICE FOR MEASURING DAMAGE TO BODYWORK
PROCÉDÉ ET DISPOSITIF SERVANT À MESURER DES DOMMAGES SUBIS PAR UNE CARROSSERIE

(30) Priorität: 22.06.2017 DE 102017210558
(43) Veröffentlichungstag der Anmeldung: 08.05.2019
(73) Patentinhaber: PDR-Team GmbH, 73527 Schwäbisch Gmünd (DE)
(72) Erfinder: WIEBE, Jan, 73527 Schwäbisch Gmünd (DE)
(74) Vertreter: Ullrich & Naumann PartG mbB
(86) Internationale Anmeldenummer: PCT/DE2018/200064
(87) Internationale Veröffentlichungsnummer: WO 2018/233780

(56) Entgegenhaltungen:
- EP-A1- 1 837 623
- EP-A2- 0 997 201
- DE-A1- 102005 013 614
- DE-A1- 102010 015 566
- DE-A1- 102014 106 238
- ANONYMOUS: "Combined Stereovision and Phase Shifting Method: Use of a ColorVisibility-Modulated Fringe Pattern", SPIE, PO BOX 10 BELLINGHAM WA 98227-0010 USA, vol. 7432, 31 December 2009 (2009-12-31) - 31 December 2009 (2009-12-31), XP040500962
- RYUSUKE SAGAWA ET AL: "Grid-Based Active Stereo with Single-Colored Wave Pattern for Dense One-shot 3D Scan", 3D IMAGING, MODELING, PROCESSING, VISUALIZATION AND TRANSMISSION (3DIMPVT), 2012 SECOND INTERNATIONAL CONFERENCE ON, IEEE, 2009, pages 363 - 370, XP032277296, ISBN: 978-1-4673-4470-8, DOI: 10.1109/3DIMPVT.2012.41

## Beschreibung

Die vorliegende Erfindung betrifft ein Verfahren zur Vermessung von Karosserieschäden, insbesondere von Hagelschäden wie Dellen, Beulen und/oder Kratzer, an Kraftfahrzeugen, wobei sich ein zu vermessendes Kraftfahrzeug während der Vermessung relativ zu einer Beleuchtungseinrichtung und einer eine oder mehrere Flächenkameras sowie eine oder mehrere 3D-Kameras umfassenden Messeinrichtung, welche an einer ortsfesten Halteeinrichtung angeordnet sind, bewegt.

Des Weiteren betrifft die vorliegende Erfindung eine Vorrichtung zur Vermessung von Karosserieschäden, insbesondere von Hagelschäden wie Dellen, Beulen und/oder Kratzer, an Kraftfahrzeugen, mit einer Beleuchtungseinrichtung und einer Messeinrichtung, welche derart an einer ortsfesten Halteeinrichtung angeordnet sind, dass eine Bewegung eines zu vermessendes Kraftfahrzeug relativ zu der Beleuchtungs- und Messeinrichtung ermöglicht ist.

Verfahren und Vorrichtungen der in Rede stehenden Art werden seit Jahren in der Praxis eingesetzt. So sind bspw. aus der DE 10 2007 013 883 A1 ein Verfahren und eine Vorrichtung zur Erfassung und Auswertung von Hagelschäden bekannt, wobei die Fahrzeugoberfläche eines zu vermessenen Kraftfahrzeugs dort mittels eines Laserscanners digital mittels Impulslaufzeit, Phasenlaufzeit oder Lichtschnitttriangulation erfasst wird. Dabei wird der Laserscanner mit maschinellem Antrieb relativ zu dem zu vermessenden Kraftfahrzeug bewegt oder das Fahrzeug wird mittels einer Vorschubeinrichtung, bspw. unter Einsatz einer Schleppmechanik oder einer schlittenähnlichen Konstruktion, mit gleichmäßiger Geschwindigkeit relativ zu den feststehenden Laserscannern bewegt.

Die bekannte Vorrichtung ist in mehrfacher Hinsicht nachteilig. Zum einen ist die Messung mittels Laserscannern zeitaufwendig, was sich negativ auf den Durchsatz der Vorrichtung auswirkt, und geht zudem mit einer komplexen Auswertung der Messergebnisse einher. Zum anderen erfordert die bekannte Vorrichtung zum Erhalt exakter Messergebnisse eine weitestgehend konstante Relativgeschwindigkeit zwischen den Laserscannern und dem Kraftfahrzeug. Dementsprechend ist eine aufwändige Mechanik notwendig, welche entweder die gesamte Messvorrichtung einschließlich des Portals und der daran angeordneten Laserscanner oder aber das Kraftfahrzeug selbst bewegt.

Die DE 10 2014 106238 A1 offenbart ein Verfahren zur Bestimmung der Oberfläche eines Objekts, wie z.B. einer Fahrzeugkarosse, mittels Deflektometrie, bei dem ein bekanntes Muster auf einer Oberfläche des Objekts abgebildet und mit einer kalibrierten Kamera aufgenommen wird. Das Objekt wird relativ zu dem abgebildeten Muster und der Kamera bewegt. In einer Ausführungsform sind zwei Kameras vorgesehen sein, die zeitgleich denselben Bereich der Oberfläche mit dem abgebildeten Muster aufnehmen, wobei die Recheneinheit zur Durchführung einer Stereo-Deflektometrie eingerichtet ist.

Die EP 1 837 623 A1 offenbart ein Verfahren zur Erfassung einer Oberflächenform einer optisch teilspiegelnden Oberfläche, das nach dem Prinzip der Rasterreflektometrie arbeitet, bei dem über die zu untersuchende Oberfläche wenigstens ein Lichtmuster abgebildet wird.

Die DE 10 2005 013614 beschreibt eine Vorrichtung zur optischen Formvermessung und/ oder Prüfung von Gegenständen, bei dem ein binokularen Stereoverfahren oder eine photometrische Deflektometrie, oder eine Kombination hieraus, eingesetzt werden.

Der vorliegenden Erfindung liegt daher die Aufgabe zugrunde, ein Verfahren und eine Vorrichtung zur Vermessung von Karosserieschäden der eingangs genannten Art derart auszugestalten und weiterzubilden, dass die genannten Probleme weitestgehend vermieden und auf einfache Weise eine präzise Oberflächenvermessung möglich ist. Dabei soll die Vorrichtung eine einfache Konstruktion aufweisen, die einen raschen Aufbau der Vorrichtung und einen flexiblen Einsatz in unterschiedlichen Umgebungen ermöglicht.

Erfindungsgemäß wird die voranstehende Aufgabe in Bezug auf das Verfahren durch die Merkmale des Anspruchs 1 gelöst. Danach ist das in Rede stehende Verfahren dadurch gekennzeichnet, dass mittels der Beleuchtungseinrichtung eine Beleuchtungsstruktur aus nebeneinander liegenden Lichtstreifen bzw. -linien auf der Fahrzeugkarosserie erzeugt wird, wobei mittels der einen oder mehreren Flächenkameras durch deflektometrische Erfassung der von der Fahrzeugkarosserie reflektierten Beleuchtungsstruktur Oberflächenbilder der Fahrzeugkarosserie erstellt werden, wobei mittels der einen oder mehreren 3D-Kameras die Form des Fahrzeugs widergebende Tiefenbilder erzeugt werden, und wobei mittels einer entsprechenden Auswerteeinrichtung in den Oberflächenbildern Defekte an der Karosserie identifiziert werden und mittels Projektion der Oberflächenbilder auf die Tiefenbilder die identifizierten Defekte auf dem Fahrzeug lokalisiert werden.

In erfindungsgemäßer Weise ist erkannt worden, dass die Schadenserfassung bei höchster Genauigkeit deutlich vereinfacht werden kann, indem die Daten von Flächenkameras, die mittels Deflektometrie Oberflächenbilder einer von der Fahrzeugkarosserie reflektierten Beleuchtungsstruktur aufnehmen, in geeigneter Weise mit Daten von 3D-Kameras, die mittels Abstandsbestimmungen die Form des Fahrzeugs wiedergebende Tiefenbilder aufnehmen, kombiniert werden. In weiter erfindungsgemäßer Weise nutzt das vorgeschlagene Scanprinzip die eigene Bewegung des Fahrzeugs. Daraus resultiert eine im Vergleich zum eingangs beschriebenen Stand der Technik drastisch erhöhte Kompaktheit und Transportabilität, da sich eine aufwändige Mechanik zur Bewegung entweder des Scansystems oder des Fahrzeugs erübrigt. Die Vorrichtung gemäß der vorliegenden Erfindung kann dementsprechend leicht transportiert und in kurzer Zeit aufgebaut und eingesetzt werden. Zudem ergibt sich ein signifikanter Vorteil dahingehend, dass keine Vordaten des Fahrzeugs zum Scannen benötigt werden, da der 3D-Scan von dem Scansystem selber durchgeführt wird. Da zudem eine einzige Durchfahrt eines Fahrzeugs durch das Scansystem ausreichend ist, um das Fahrzeug vollständig zu untersuchen, ergibt sich im Vergleich zum Stand der Technik eine drastische Reduktion der Durchlaufzeiten. Die Dauer des Scanvorgangs einschließlich Datenverarbeitung und Auswertung liegt bei Anwendung des erfindungsgemäßen Verfahrens pro Fahrzeug bei weniger als 5 Minuten. Dies bedeutet eine signifikante Beschleunigung des Schadenfeststellungsprozesses.

Das Dellenscan-System gemäß der vorliegenden Erfindung dient insbesondere zur automatischen Erfassung und Klassifizierung von Hagelschäden an Fahrzeugkarosserien. Zur Schadenserfassung fährt das Fahrzeug langsam durch bzw. an der mit Beleuchtung und Kameras ausgerüsteten Halteeinrichtung vorbei, während die Flächenkameras die Reflexion der Beleuchtung auf der Karosserie aufnehmen. Gemäß vorteilhafter Ausgestaltung wird über eine anschließende Auswertung der Aufnahmen mittels Bildverarbeitung die Größe und Position jeder Hageldelle in der Fahrzeugkarosserie bestimmt, aus der mit anerkannten Formeln die Reparaturkosten berechnet werden können. Der Einsatz des Systems besteht somit vorrangig in der Unterstützung der KFZ-Sachverständigen in den lokalen Hagelstationen der Hagelexperten. Diese Hagelstationen bilden typischerweise die Anlaufstellen für Kunden, die eine Besichtigung und Versicherungsabwicklung ihres Hagelschadens wünschen.

In vorteilhafter Weise wird während der Vermessung eines Kraftfahrzeugs die Position des Kraftfahrzeugs in Fahrtrichtung relativ zu der Messeinrichtung gemessen. Die so gewonnenen Positionsdaten des Fahrzeugs werden im Rahmen der Datenauswertung mit den aufgenommenen Oberflächen- und Tiefenbildern in Beziehung gesetzt, wodurch eine exakte Lokalisation der identifizierten Defekte auf bzw. an der Fahrzeugkarosserie ermöglicht ist.

In besonders vorteilhafter Weise werden die aufgenommenen Tiefenbilder unter Berücksichtigung der gewonnenen jeweiligen Positionsdaten des Kraftfahrzeugs zu einem 3D-Model des Fahrzeugs zusammengefügt. Im Konkreten können aus den einzelnen Tiefenbildern der Tiefenkameras 3D-Daten berechnet werden, die mittels der Positionsdaten zu einem einzigen kompletten 3D-Modell des Fahrzeugs zusammengefügt werden.

Gemäß einer weiteren vorteilhaften Ausgestaltung kann im Rahmen der Datenauswertung für jede der eingesetzten Flächenkameras aus den jeweils aufgenommenen Oberflächenbildern ein Verformungsbild berechnet werden. Hierzu können, ggf. nach entsprechender Bearbeitung der aufgenommenen Einzelbilder mittels einer speziellen Bildverarbeitung, die verschiedene Filter umfasst, die aufgenommenen Oberflächenbilder in Abhängigkeit von der jeweils gemessenen Position des Fahrzeugs verschoben und sodann addiert werden.

Des Weiteren kann vorgesehen sein, dass im Rahmen der Datenauswertung ein 3D-Verformungsbild der gesamten Fahrzeugkarosserie erzeugt wird. Hierzu können beispielsweise die jeweiligen Verformungsbilder der einzelnen Flächenkameras mithilfe des 3D-Models des Fahrzeugs zusammengefügt werden.

Gemäß einer weiteren vorteilhaften Ausgestaltung können in dem 3D-Verformungsbild Defekte an der Karosserie mittels eines Bildverarbeitungsalgorithmus hinsichtlich Art und Größe klassifiziert werden. Der eingesetzte Bildverarbeitungsalgorithmus kann bspw. auf Template-Matching basieren, wozu im Vorfeld ein Satz von unterschiedlichen Defekten, die typischerweise von Hageleinwirkungen verursacht werden, eingelernt werden muss. Auf Basis der eingelernten Defekte können dann sämtliche identifizierten Defekte über einen Bildvergleich erkannt werden, wobei vorgesehen sein kann, dass der Bildverarbeitungsalgorithmus derart ausgestaltet ist, dass er nicht nur die Erkennung eines Defekts (d.h. eine Klassifizierung) liefert, sondern ebenfalls die Größe des Defekts ermittelt.

Die in Rede stehende Aufgabe wird des Weiteren durch die Merkmale des Anspruchs 7 gelöst. Danach ist die in Rede stehende Vorrichtung dadurch gekennzeichnet, dass die Beleuchtungseinrichtung eine Beleuchtungsstruktur aus nebeneinander liegenden Lichtstreifen bzw. -linien auf der Fahrzeugkarosserie erzeugt, und dass die Messeinrichtung eine oder mehrere Flächenkameras sowie eine oder mehrere 3D-Kameras umfasst, wobei die eine oder mehrere Flächenkameras ausgelegt sind, durch deflektometrische Erfassung der von der Fahrzeugkarosserie reflektierten Beleuchtungsstruktur Oberflächenbilder der Fahrzeugkarosserie zu erstellen, in denen Defekte an der Karosserie mittels einer entsprechenden Auswerteeinrichtung identifizierbar sind, und wobei die eine oder mehrere 3D-Kameras ausgelegt sind, mittels Abstandsbestimmungen die Form des Fahrzeugs widergebende Tiefenbilder derart zu erzeugen, dass mittels Projektion der Oberflächenbilder auf die Tiefenbilder eine Lokalisation der anhand der Oberflächenbilder identifizierten Defekte auf dem Fahrzeug ermöglicht ist.

Es wird darauf hingewiesen, dass die zuvor erörterten Merkmale zu dem erfindungsgemäßen Verfahren auch eine vorrichtungsgemäße Ausprägung haben können. Eine Kombination dieser Merkmale mit den Merkmalen betreffend den Vorrichtungsanspruch ist nicht nur möglich, sondern von Vorteil und ausdrücklich Teil der Offenbarung.

In vorteilhafter Weise ist sowohl die Beleuchtungseinrichtung als auch die Messeinrichtung einer portalartigen bzw. torbogenförmigen Halteeinrichtung zugeordnet. Diese Halteeinrichtung ist so dimensioniert, dass sie die Durchfahrt eines Kraftfahrzeugs ermöglicht.

Gemäß einer vorteilhaften Ausgestaltung ist sowohl die Anzahl der eingesetzten Flächenkameras und der 3D-Kameras als auch deren Anordnung an der Halteeinrichtung so gewählt, dass die gesamte Fahrzeugkarosserie während einer Vorbei- bzw. Durchfahrt des Fahrzeugs vermessbar ist. Dies führt zu einer drastischen Reduktion der Durchlaufzeiten und damit zu einer signifikanten Erhöhung des Durchsatzes an Fahrzeugen.

Im Hinblick auf einen flexiblen Einsatz der Vorrichtung und eine schnelle Einsatzfähigkeit der Vorrichtung ist gemäß einer vorteilhaften Ausgestaltung vorgesehen, dass die Halteeinrichtung modulartig aus einzelnen Segmenten bzw. Modulen aufgebaut ist. Dies ermöglicht einen einfachen Transport der Vorrichtung im abgebauten Zustand und unterstützt somit den flexiblen Einsatz der Vorrichtung an unterschiedlichen Einsatzorten. Die einzelnen Segmente können derart ausgestaltet sein, dass sie mittels eines Steck-, Schraub- und/oder Rastmechanismus einfach miteinander verbunden werden können. In einer Grundversion kann vorgesehen sein, dass die Segmente einen Durchfahrtsbogen bilden, dessen Ausmaße die Vermessung aller Kfz vom Kleinwagen bis zum SUV ermöglichen. In einer erweiterten Version können zusätzliche Segmente vorgesehen sein, die den Durchfahrtsbogen in der Höhe und/oder in der Breite so erweitern, dass auch größere Fahrzeuge, wie bspw. ein Kleintransporter oder ein Kleinbus, vermessen werden können.

Gemäß einer weiteren vorteilhaften Ausgestaltung umfasst die Vorrichtung ein Messsystem zur Positionsbestimmung eines zu vermessenden Kraftfahrzeugs relativ zu der Messeinrichtung während der Vorbeifahrt des Kraftfahrzeugs an der Halteeinrichtung bzw. der Durchfahrt durch den Durchfahrts-/Torbogen. In einer konkreten Ausführungsform kann das Messsystem einen Abstandsmesser aufweisen, welcher bspw. einen auf dem Lichtlaufzeitverfahren basierenden Laserdistanzsensor umfasst. Alternativ kann der Abstandsmesser auch eine nach dem Time-of-Flight-Prinzip arbeitende (Consumer-) Tiefenkamera umfassen. Im Hinblick auf eine eine reibungslose Durchfahrt von Kraftfahrzeugen ermöglichende Positionierung bzw. Anordnung des Abstandsmessers kann in beiden Fällen, d.h. sowohl bei Einsatz eines Laserdistanzsensors als auch bei Einsatz einer Tiefenkamera, vorgesehen sein, dass der Abstandsmesser in einem überfahrbaren schwellenartigen Bodenelement angeordnet ist. Dieses Bodenelemente kann in einem geeigneten Abstand, welcher typischerweise einige Meter beträgt, in Fahrtrichtung vor dem Durchfahrtsbogen platziert werden.

Zusätzlich oder alternativ kann das Messsystem ein Rad-Kamerasystem aufweisen, welches insgesamt vier Kameras umfasst. Diese Kameras können ebenfalls an der Halteeinrichtung angeordnet sein, wobei eine separate Anordnung ebenfalls denkbar ist. Wesentlich ist jedenfalls, dass die Kameras sich auf Höhe der Fahrzeugräder eines zu vermessenden Kraftfahrzeugs befinden und paarweise angeordnet sind, sodass sich auf jeder Seite eines Kraftfahrzeugs jeweils zwei Kameras befinden. Die beiden so angeordneten Kamerapaare sind derart ausgestaltet, dass sie jeweils die Räder eines Kraftfahrzeugs erkennen bzw. detektieren und mittels Stereoskopie bzw. Stereovision die 3D-Position aller erkannten bzw. detektieren Fahrzeugräder berechnen. Aus der 3D-Position der Fahrzeugräder kann sodann die 3D-Position des Kraftfahrzeugs berechnet werden.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 7 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel einer erfindungsgemäßen Vorrichtung zur Durchführung des erfindungsgemäßen Verfahrens,
- Fig. 2: in einer schematischen Darstellung ein Ausführungsbeispiel eines Durchfahrtsbogens,
- Fig. 3: in einer schematischen Darstellung eine Draufsicht des Durchfahrtsbogens gemäß Fig. 2,
- Fig. 4: in einer schematischen Darstellung eine Innenansicht eines Seitenmoduls des Durchfahrtsbogens gemäß Fig. 2,
- Fig. 5: in einer schematischen Darstellung eine Querschnittsansicht eines Seitenmoduls des Durchfahrtsbogens gemäß Fig. 2,
- Fig. 6: ein vereinfachtes Flussdiagramm zur Erläuterung der Datenauswertung gemäß einem Ausführungsbeispiel des erfindungsgemäßen Verfahrens, und
- Fig. 7: ein vereinfachtes Flussdiagramm zur Erläuterung der Berechnung eines Verformungsbildes gemäß einem Ausführungsbeispiel des erfindungsgemäßen Verfahrens.

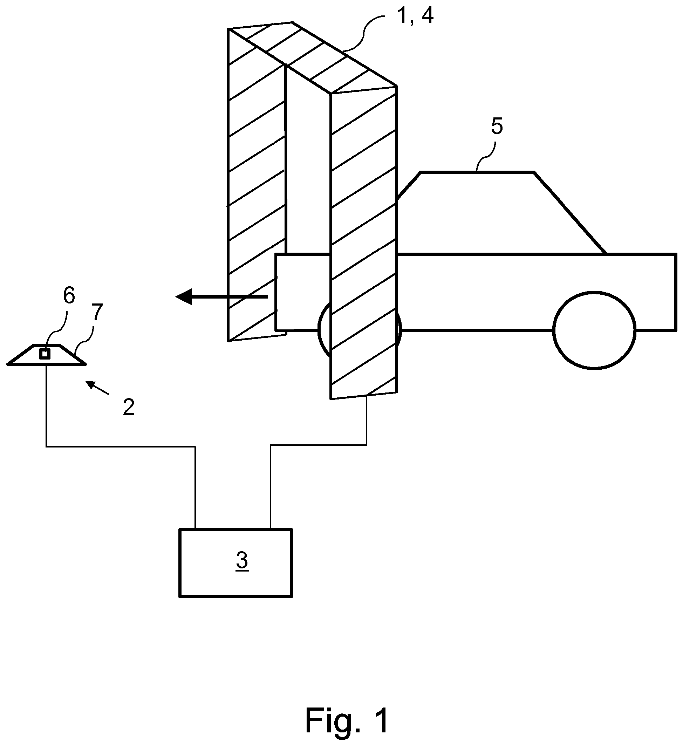

Fig. 1 zeigt in einer grob schematischen und nicht maßstabsgetreuen Ansicht einen beispielhaften Aufbau sowie das grundsätzliche Funktionsprinzip einer erfindungsgemäßen Vorrichtung zur Durchführung eines erfindungsgemäßen Verfahrens. Die Vorrichtung entsprechend dem dargestellten Ausführungsbeispiel umfasst eine ortsfeste Halteeinrichtung 1, ein Messsystem 2 zur Positionsbestimmung sowie eine Auswerteeinheit 3.

Die Halteeinrichtung 1 ist als Durchfahrtsbogen 4 ausgeführt, welcher so dimensioniert ist, dass zu vermessende Kraftfahrzeuge 5 üblicher Größe, d.h. vom Kleinwagen bis zum SUV, den Durchfahrtsbogen 4 passieren können, d.h. unter diesem hindurch fahren können, wie in Fig. 1 durch den die Bewegungsrichtung des Kraftfahrzeugs 5 anzeigenden Pfeil angedeutet ist. An der Halteeinrichtung 1 sind eine (in Fig. 1 nicht dargestellte) Beleuchtungseinrichtung sowie eine (in Fig. 1 ebenfalls nicht dargestellte) Messeinrichtung umfassend eine oder mehrere Flächenkameras sowie eine oder mehrere 3D-Kameras angeordnet.

Das Messsystem 2 zur Positionsbestimmung umfasst in dem in Fig. 1 dargestellten Ausführungsbeispiel einen Laserdistanzsensor 6, welcher basierend auf dem Lichtlaufzeitverfahren während der Durchfahrt eines zu vermessenen Fahrzeugs 5 durch die Halteeinrichtung 1 kontinuierlich den relativen Abstand des Fahrzeugs 5 in Fahrtrichtung zur Messeinrichtung detektiert. Damit dieses in geeigneter Weise in einigen Metern Abstand vor der Halteeinrichtung 1 in Fahrtrichtung platzierte Messsystem 2 die Durchfahrt des Fahrzeugs 5 nicht behindert, ist der Laserdistanzsensor 6 in ein überfahrbares Element im Sinne einer Bodenschwelle 7 integriert.

Es sei an dieser Stelle betont, dass es sich bei der Verwendung eines Laserdistanzsensors 6, wie oben beschrieben und in Fig. 1 gezeigt, lediglich um ein Ausführungsbeispiel handelt. Andere Varianten zur Positionsbestimmung des Fahrzeugs 5 während des Passierens der Kameras der Messeinrichtung sind ebenfalls denkbar. So könnten bspw. weitere Kameras vorgesehen sein, die ein Radkamera-System bilden. In einer konkreten Ausgestaltung könnte dieses Radkamera-System insgesamt vier Kameras umfassen, die auf Höhe der Fahrzeugräder an der Halteeinrichtung 1 angeordnet sind und paarweise auf jeder Seite des Fahrzeugs 5 stereoskopisch die Fahrzeugräder detektieren. Aus der so ermittelten 3D-Position der Fahrzeugräder kann dann die relative Position des Fahrzeugs 5 in Bezug auf die Messeinrichtung ermittelt werden.

Wie in Fig. 1 angedeutet, sind sowohl das Messsystem 2 zur Positionsbestimmung des Fahrzeugs 5 als auch die an der Halteeinrichtung 1 angeordneten Kameras der Messeinrichtung mittels entsprechender Kabelverbindungen mit der Auswerteeinheit 3 verbunden. Eine drahtlose Übertragung der Messdaten an die Auswerteeinheit 3 ist grundsätzlich ebenfalls denkbar.

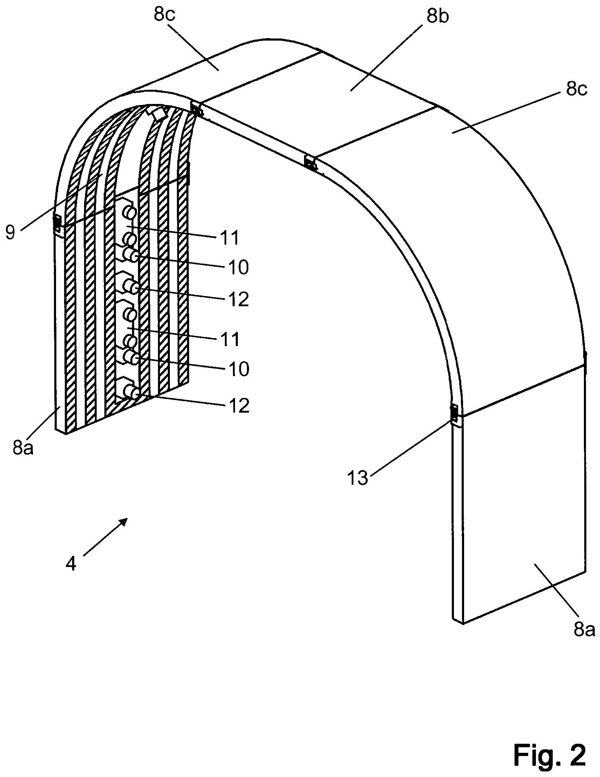

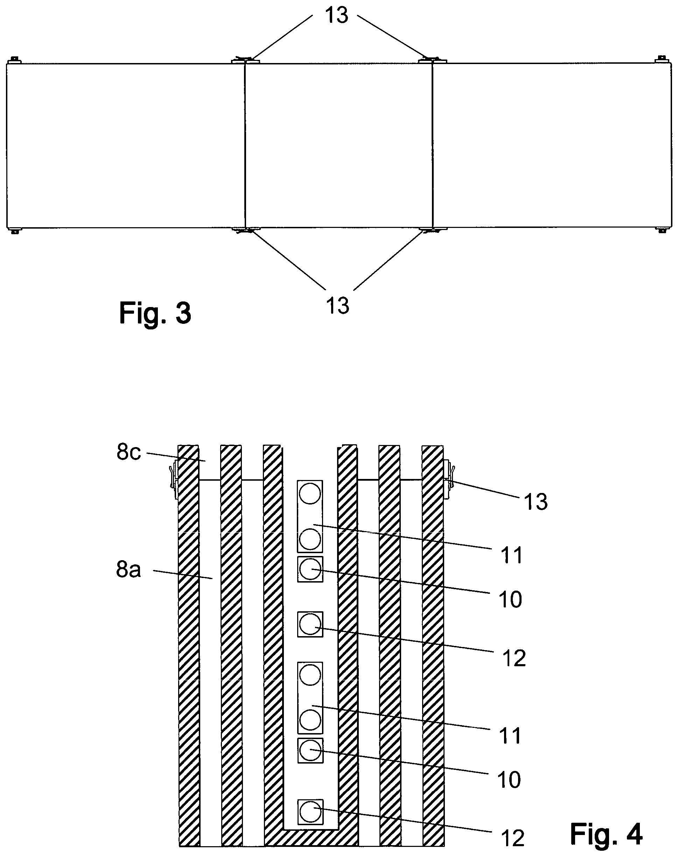

Fig. 2 zeigt schematisch ein Ausführungsbeispiel einer als Durchfahrtsbogen 4 ausgeführten Halteeinrichtung 1. Deutlich zu erkennen ist der modulartige Aufbau der Halteeinrichtung 1, der ein schnelles und flexibles Auf- und Abbauen der Vorrichtung sowie einen unkomplizierten Transport ermöglicht. In der dargestellten Ausführungsform umfasst die Halteeinrichtung 1 insgesamt fünf Module, nämlich zwei eben ausgeführte, bodenseitig angeordnete Seitenmodule 8a, ein eben ausgeführtes mittiges Zentralmodul 8b, sowie zwei bogenförmig ausgeführte Zwischenmodule 8c, die jeweils zwischen einem der Seitenmodule 8a und dem mittigen Zentralmodul 8b angeordnet sind. Die Module 8 sind derart ausgestaltet, dass sie einfach zusammengesteckt werden können, wobei ein an einem der Module 8 ausgebildeter Dorn in eine entsprechende, an dem jeweiligen anderen Modul 8 ausgebildete Nut eingreift. Die so hergestellten Steckverbindungen können mittels Rast- bzw. Schnappverschlüssen 13, die auch in der entsprechenden Draufsicht gemäß Fig. 3 zu erkennen sind, arretiert werden. Wenngleich sich diese Verbindungsweise der Module 8 aufgrund ihrer Stabilität und gleichzeitig einfachen Lösbarkeit als besonders geeignet erweist, sind grundsätzlich auch andere Montagearten denkbar, bspw. Schraub- oder Rastverbindungen.

Die Module 8 sind entsprechend dem beabsichtigten Einsatzzweck vorkonfektioniert. Das bedeutet, dass die jeweiligen Kameras der Messeinrichtung bereits an für die jeweiligen Messungen geeigneten Stellen in die Module 8 integriert sind. Dies kann auch für die Beleuchtungseinrichtung vorgesehen sein. Ändert sich der Einsatzzweck, können einzelne Module 8 leicht ausgetauscht werden oder kann der Aufbau durch zusätzliche Module 8 erweitert werden. So eignet sich beispielsweise der in Fig. 2 gezeigte Aufbau für die Vermessung von normalen PKWs (vom Kleinwagen bis zum SUV). Soll die Vorrichtung zur Vermessung von Kleintransportern oder Kleinbussen umgebaut werden, so kann dies einfach dadurch realisiert werden, dass zwei zusätzliche Seitenmodule 8a (zur Vergrößerung der Durchfahrtshöhe) sowie ein zusätzliches Zentralmodul 8b (zur Vergrößerung der Durchfahrtsbreite), in welche ebenfalls die entsprechend benötigten Kameras und Beleuchtungseinrichtungen wie oben beschrieben integriert sind, in den Aufbau eingefügt bzw. ergänzt werden.

Die an der Halteeinrichtung 1 angeordnete Beleuchtungseinrichtung umfasst mehrere (in den Fig. 2-4 nicht dargestellte) LEDs, die auf der Innenseite 9 des Durchfahrtsbogens 4 eine Streifenbeleuchtung erzeugen. Die Beleuchtung hat die Aufgabe, eine geeignete Reflexion mit einer deutlichen Struktur auf der Fahrzeugkarosserie zu erzeugen, welche von den Flächenkameras aufgenommen werden kann. Im konkreten besteht die Beleuchtung aus einer Vielzahl schmaler nebeneinanderliegende Linien bzw. Streifen, so dass im Ergebnis helle und dunkle Linien einander abwechseln, vorzugsweise mit harten Übergängen. Die Linienabstände sind vorzugsweise konstant, können jedoch auch unterschiedlich sein.

Für ein optimales Scanergebnis ist es wichtig, dass die Reflexionsstreifen möglichst homogen leuchten. In konstruktiver Hinsicht kann daher vorgesehen sein, dass die Innenseiten 9 der Module 8 des Durchfahrtsbogens 4 eine matt-transparente Schicht aufweisen, z.B. in Form einer Plexiglasplatte oder -scheibe, die mittels geeigneter Lichtquellen hinterleuchtet wird. Insbesondere kann die Schicht bzw. Plexiglasplatte von hinten mit LED-Streifen, die in einem gewissen Abstand zu der Schicht bzw. Plexiglasplatte angeordnet sind, beleuchtet werden. Hierbei kann die matt-transparente Schicht bzw. Plexiglasplatte derart foliert sein, dass diejenigen Streifen bzw. Linien, die in dem zu erzeugenden Beleuchtungsmuster dunkel erscheinen sollen, abgedeckt sind. Für die Bereiche, die als helle Streifen bzw. Linien erscheinen sollen, ist demgegenüber keine Abdeckung vorgesehen. Der Abstand der Beleuchtung, d.h. bspw. der LEDs, von der Schicht ist dabei so gewählt, dass einerseits möglichst wenig Licht verloren geht und andererseits die einzelnen Lichtquellen, d.h. bspw. die LEDs, eines Lichtstreifens von vorne nicht erkennbar ist, d.h. der Lichtstreifen homogen erscheint.

Wesentlich für eine möglichst vollständige Erfassung eines Fahrzeugs 5 während der Durchfahrt durch den Durchfahrtsbogen 4 ist, dass die Reflexion so umschließend wie möglich um das Fahrzeug 5 positioniert ist, sodass die Flächenkameras in jeder Karosseriefläche eine Reflexion der Beleuchtung sehen können. Des Weiteren ist es im Hinblick auf die Gewährleistung optimaler Messergebnisse vorteilhaft, wenn die Reflexionslinien einen möglichst unterbrechungs- und knickfreien Verlauf aufweisen. Vor diesem Hintergrund ist es zweckmäßig, dass die Zwischenmodule 8c des Durchfahrtsbogens 4, wie im Ausführungsbeispiel gemäß Fig. 2, eine stetige Krümmung aufweisen.

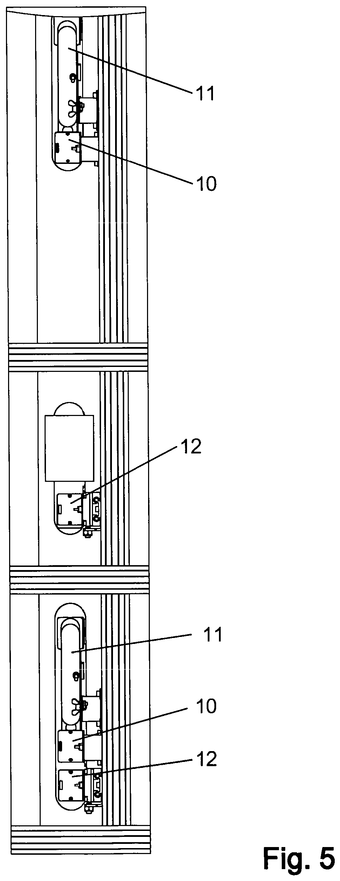

Die Fig. 3-5 zeigen unterschiedliche Perspektiven des Durchfahrtsbogens 4 gemäß Fig. 2 bzw. Ausschnitte desselben. In diesen Figuren ist deutlich erkennbar, wie die einzelnen Kameras der Messeinrichtung in die Module 8 des Durchfahrtsbogens 4 integriert sind. So zeigt z.B. Fig. 5, die ein Seitenmodul 8a des Durchfahrtsbogens 4 im Querschnitt darstellt, sowohl im oberen Bereich als auch im unteren Bereich jeweils eine Flächenkamera 10 sowie eine 3D-Kamera 11. Im mittleren Bereich sowie im unteren Bereich sind zusätzlich jeweils eine weitere Kamera 12 vorgesehen, die, wie oben beschrieben, stereoskopisch zusammenwirken und ein Radkamera-System zur Positionsbestimmung des Fahrzeugs 5 während der Durchfahrt bilden. Die genannten Kameras sowie die entsprechenden Ausnehmungen in der Innenverkleidung des Durchfahrtsbogens 4 sind insbesondere auch in Fig. 2 deutlich zu erkennen. Eine entsprechende Anordnung von Kameras 10, 11 und 12 findet sich in dem gegenüberliegenden Seitenmodul 8a. Zur Erfassung der Oberseite des Fahrzeugs (d.h. insbesondere Motorhaube, Dach und Kofferraum) sind eine Flächenkamera 10 und eine 3D-Kamera 11 in gleicher Einbauweise ebenfalls in dem mittigen Zentralmodul 8b vorgesehen. Es versteht sich, dass in Abhängigkeit von der jeweiligen Messsituation eine andere Anordnung realisiert werden kann, bei der sowohl die Anzahl von Flächenkameras 10 und 3D-Kameras 11 als auch die Einbauart von dem oben beschriebenen Ausführungsbeispiel abweichen können.

Die Flächenkameras 10 basieren auf dem Messprinzip der Deflektometrie und erzeugen durch Erfassung der von der Fahrzeugkarosserie reflektierten linienförmigen Beleuchtungsstruktur Oberflächenbilder der Fahrzeugkarosserie. In einer Variante der Vorrichtung werden bspw. Flächenkameras 10 des Typs ,IDS UI-3140CP-C-HQ Rev. 2' verwendet. Die 3D-Kameras 11 werden demgegenüber eingesetzt, um die Form des Fahrzeugs 5 wiedergebende Tiefenbilder zu erzeugen. Grundsätzlich können zu diesem Zweck handelsübliche Consumer-Tiefenkameras eingesetzt werden, die bspw. nach dem gleichen oder einem ähnlichen Funktionsprinzip wie die ,Kinect for Xbox 360' arbeiten.

Die Kameras 10 und 11 können entweder vorkalibriert sein, so dass nach dem Aufstellen der Scanvorrichtung direkt mit der Vermessung von Fahrzeugen begonnen werden kann. Alternativ kann vorgesehen sein, dass nach dem Aufstellen des Scanners einmalig ein Kalibrierprozess durchgeführt wird. Dazu werden von den Kameras 10 und 11 detektierbare Marker an einem Fahrzeug angebracht. Die Marker können hierzu bspw. auf Referenztafeln aufgedruckt sein, wobei die Referenztafeln magnetisiert sein können oder mittels Saugnäpfen an entsprechenden Stellen auf bzw. an der Fahrzeugkarosserie angebracht werden können. Das derart eingerichtete Fahrzeug fährt sodann in Schrittgeschwindigkeit zweimal durch den Durchfahrtsbogen 4 hindurch, wobei bei der ersten Durchfahrt Infrarotbilder mittels der 3D-Kameras 11 aufgenommen werden und bei der zweiten Durchfahrt Tiefenbilder mittels der Flächenkameras 10 aufgenommen werden. In den beiden Scans werden die Marker von den 2D-Kameras 10 bzw. den 3D-Kameras 11 erkannt und daraus die Perspektiventransformation für die Kameras und weitere relevante Parameter bestimmt.

Sämtliche Kameras 10, 11, 12 sind direkt mit der Auswerteeinheit 3 verbunden. In einer konkreten Ausführungsform kann die Auswerteeinheit 3 ein Computer-Rack umfassen, in dem Computerhardware zur Steuerung des Scansystems sowie Auswerterechner zur Erfassung der Kamera- und Abstandsdaten und zur Auswertung der Daten mittels Bildverarbeitung eingebaut sind. Im Hinblick auf eine leichte Bedienbarkeit kann auf dem Rack ein Touchbildschirm vorgesehen sein, mit dessen Hilfe das Scansystem gesteuert werden kann und die Messergebnisse betrachtet werden können.

Während sich ein zu inspizierendes Fahrzeug 5 langsam durch den Durchfahrtsbogen 4 bewegt, erzeugt die Beleuchtungseinrichtung eine Reflexion auf der Karosserie, die durch die Oberflächenform der Karosserie verzerrt wird. Gemäß einer Ausführungsform wird die Fahrzeugkarosserie während der Durchfahrt des Fahrzeugs 5 fortlaufend von den Flächenkameras 10 so aufgenommen, dass die Reflexion in den aufgenommenen Oberflächenbildern sichtbar ist. Gleichzeitig nehmen die Tiefen- bzw. 3D-Kameras 11 Tiefen- bzw. 3D-Bilder von der Karosserie auf. Das Messsystem 2 zur Positionsbestimmung, d.h. bspw. der Laserdistanzsensor 6, liefert zu jeder Aufnahme aller Kameras 10, 11 die momentane Position des Fahrzeugs 5. Wie nachfolgend im Detail beschrieben, werden in den Oberflächenbildern, ggf. nach geeigneter Vorverarbeitung, Defekte an der Karosserie identifiziert. Mittels Projektion der Oberflächenbilder auf die Tiefenbilder, die auf Basis der jeweiligen Daten des Messsystems 2 zur Positionsbestimmung ausgeführt wird, werden die identifizierten Defekte sodann auf dem Fahrzeug 5 lokalisiert.

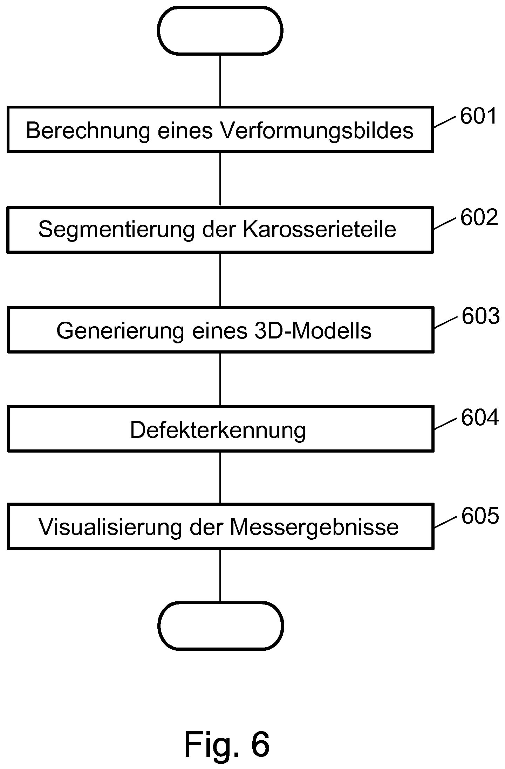

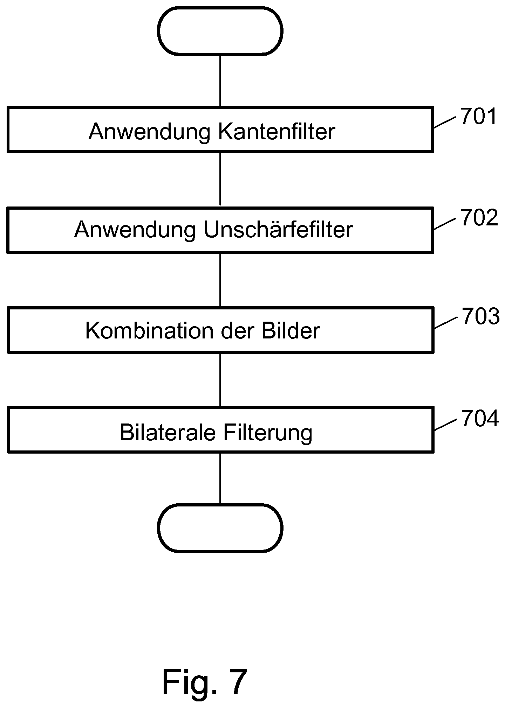

Fig. 6 zeigt ein vereinfachtes Flussdiagramm zur Erläuterung der Datenauswertung gemäß einem Ausführungsbeispiel des erfindungsgemäßen Verfahrens. Nach erfolgter einmaliger Durchfahrt des Fahrzeugs 5 durch den Durchfahrtsbogen 4 wird im Rahmen der Datenauswertung zunächst ein Verformungsbild berechnet (Schritt 601). Dieser Schritt wird zunächst für jede Flächenkamera 10 separat ausgeführt, indem der Bildverarbeitungsprozess gemäß Fig. 7 pro Flächenkamera 10 durchlaufen wird.

Dementsprechend wird zunächst auf jedes Bild der von einer Flächenkamera 10 aufgenommenen Sequenz ein Kantenfilter angewendet, damit nur Grauwertänderungen sichtbar sind (Schritt 701). Gemäß Schritt 702 wird das so erhaltene Kantenfilterbild sodann mit einem Unschärfefilter, bspw. einem Gauß-Filter, geglättet. Um ein komplettes Bild des Fahrzeugs 5 zu erstellen, werden die bearbeiteten Kamerabilder je nach gemessener Position des Fahrzeugs 5 verschoben und addiert bzw. miteinander kombiniert (Schritt 703). Schließlich wird gemäß Schritt 704 eine bilaterale Filterung durchgeführt, wobei die feine Linienstruktur, die durch die Reflexionsstruktur der Beleuchtungseinrichtung entsteht, geglättet wird.

Die so erzeugten Verformungsbilder der einzelnen Flächenkameras 10 werden dann mithilfe der 3D-Positionsdaten zu einem 3D-Verforumgsbild zusammengesetzt. Schritt 601 ist damit abgeschlossen.

Im anschließenden Schritt 602 wird unter Verwendung der 3D-Positionsdaten eine Segmentierung der Karosserieteile im Verformungsbild vorgenommen, sodass das Scanergebnis die Größe und Position jedes Defekts pro Karosserieteil liefert.

Gemäß Schritt 603 werden aus den einzelnen Tiefenbildern der 3D-Kameras 11 3D-Daten berechnet, die mittels der Abstandsdaten zu einem einzigen kompletten 3D-Modell des Fahrzeugs 5 zusammengefügt werden. Auf dieses 3D-Modell können die Verformungsbilder draufprojiziert werden, so dass sich ein komplettes räumliches Verformungsbild ergibt.

In Schritt 604 findet die Defekterkennung statt, wobei insbesondere Hageldellen im Verformungsbild über einen auf Template-Matching basierenden Bildverarbeitungsalgorithmus erkannt werden. Hierzu wird ein geeigneter Satz von typischen Hageldellen eingelernt, mit dem dann alle Dellen über einen Bildvergleich erkannt werden können. Der Algorithmus ist so konstruiert, dass er nicht nur die Art des konkreten Defekts erkennt, d.h. eine Klassifizierung vornimmt, sondern auch die Größe einer Hageldelle liefert.

Schließlich werden die Messergebnisse in Schritt 605 in aufbereiteter Form visualisiert. Dies kann in verschiedenen Formen realisiert werden, z.B. als Sprengzeichnung der Karosserie, in Tabellenform oder als interaktives 3D-Modell. Unter Zugrundelegung der Größen und Positionen der identifizierten Haltestellen in der Fahrzeugkarosserie können unter Anwendung von anerkannten Schadensformen zudem die entsprechenden Reparaturkosten berechnet und ausgegeben bzw. angezeigt werden.

Im Rahmen einer vorteilhaften Ausführungsform arbeitet die Scanvorrichtung konkret mit zehn Flächenkameras 10 und fünf 3D-Kameras 11, sowie zusätzlich einem Messsystem 2 zur Positionsbestimmung, bspw. einem Abstandssensor. Es sei angemerkt, dass eine geringere Anzahl von Kameras, beispielsweise nur fünf Flächenkameras 10, grundsätzlich ebenfalls möglich ist. Nach Aufnahme der Reflexion und der Tiefendaten findet zunächst eine Bildvorverarbeitung statt, welche die notwendigen Perspektiventransformationen bzw. -korrekturen der einzelnen aufgenommenen Bilder sowie ggf. die Anwendung weitere Bildverarbeitungsschritte. Diese weiteren Bildverarbeitungsschritte können bspw. eines speziellen richtungskodierenden Kantenfilters und/oder einen Eigenwertfilter umfassen. Die Anwendung eines Eigenwertfilters hat grundsätzlich den Vorteil, dass Dellen im späteren Gesamtbild besser sichtbar gemacht werden können.

Nach Abschluss der Bildvorverarbeitung wird, wie bereits oben beschrieben, ein 3D-Prozess ausgeführt, indem alle aufgenommenen Tiefenbilder zu einem kompletten 3D-Mesh bzw. zu einer vollständigen Tiefenkarte des jeweiligen Fahrzeugs 5 kombiniert werden. In einem nächsten Schritt wird basierend auf dieser Tiefenkarte durch gewichtete Addition der vorverarbeiteten 2D-Bilder ein Dellen bzw. Verformungsbild des gesamten Fahrzeugs 5 berechnet. In diesem Dellen bzw. Verformungsbild werden mittels Erkennung der Bauteilkanten die einzelnen Bauteile der Fahrzeugkarosserie segmentiert. Schließlich werden in dem Dellen bzw. Verformungsbild pro Bauteil Dellen identifiziert und auf Basis eingelernter Dellenmuster klassifiziert. Unter Zugrundelegung anerkannter Formeln können auf Basis der identifizierten und klassifizierten Dellen die Reparaturkosten, sowohl bauteilspezifisch als auch insgesamt, berechnet und ausgegeben werden.

Hinsichtlich weiterer vorteilhafter Ausgestaltungen der erfindungsgemäßen Vorrichtung bzw. des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung bzw. des erfindungsgemäßen Verfahrens lediglich zur Erörterung der beanspruchten Lehre dienen, diese jedoch nicht auf die Ausführungsbeispiele einschränken. Die Erfindung ist in den Ansprüchen definiert.

### Bezugszeichenliste

- 1: Halteeinrichtung
- 2: Messsystem zur Positionsbestimmung
- 3: Auswerteeinheit
- 4: Durchfahrtsbogen
- 5: Fahrzeug
- 6: Laserdistanzsensor
- 7: schwellenartiges Bodenelement
- 8a: Seitenmodul
- 8b: Zentralmodul
- 8c: Zwischenmodul
- 9: Innenseite
- 10: Flächenkamera
- 11: 3D-Kamera
- 12: Kameras des Radkamera-Systems
- 13: Schnappverschluss

## Patentansprüche

1. Verfahren zur Vermessung von Karosserieschäden, insbesondere von Hagelschäden wie Dellen, Beulen und/oder Kratzer, an Kraftfahrzeugen, wobei sich ein zu vermessendes Kraftfahrzeug (5) während der Vermessung relativ zu einer Beleuchtungseinrichtung und einer eine oder mehrere Flächenkameras (10) umfassenden Messeinrichtung, welche an einer ortsfesten Halteeinrichtung (1) angeordnet sind, bewegt,
wobei mittels der Beleuchtungseinrichtung eine Beleuchtungsstruktur aus nebeneinander liegenden Lichtstreifen bzw. -linien auf der Fahrzeugkarosserie erzeugt wird,
wobei mittels der einen oder mehreren Flächenkameras (10) durch deflektometrische Erfassung der von der Fahrzeugkarosserie reflektierten Beleuchtungsstruktur Oberflächenbilder der Fahrzeugkarosserie erstellt werden, und
wobei mittels einer entsprechenden Auswerteeinrichtung (3) in den Oberflächenbildern Defekte an der Karosserie identifiziert werden,
**dadurch gekennzeichnet, dass** die Messeinrichtung zusätzlich eine oder mehrere an der ortsfesten Halteeinrichtung (1) angeordnete 3D-Kameras (11) umfasst, wobei mittels der einen oder mehreren 3D-Kameras (11) mittels Abstandsbestimmungen die Form des Fahrzeugs widergebende Tiefenbilder erzeugt werden, und
wobei mittels Projektion der Oberflächenbilder auf die Tiefenbilder die identifizierten Defekte auf dem Fahrzeug (5) lokalisiert werden.

2. Verfahren nach Anspruch 1, wobei während der Vermessung eines Kraftfahrzeugs (5) die Position des Kraftfahrzeugs (5) in Fahrtrichtung relativ zu der Messeinrichtung gemessen wird.

3. Verfahren nach Anspruch 1, wobei die aufgenommenen Tiefenbilder unter Berücksichtigung der gewonnenen jeweiligen Positionsdaten des Kraftfahrzeugs (5) zu einem 3D-Model des Fahrzeugs (5) zusammengefügt werden.

4. Verfahren nach Anspruch 3, wobei für jede der Flächenkameras (10) ein Verformungsbild erzeugt wird, indem die jeweils aufgenommenen Oberflächenbilder in Abhängigkeit von der jeweils gemessenen Position des Fahrzeugs (5) verschoben und sodann addiert werden.

5. Verfahren nach Anspruch 4, wobei ein 3D-Verformungsbild der gesamten Fahrzeugkarosserie erzeugt wird, indem die jeweiligen Verformungsbilder der einzelnen Flächenkameras (10) mithilfe des 3D-Models des Fahrzeugs (5) zusammengefügt werden.

6. Verfahren nach Anspruch 5, wobei in dem 3D-Verformungsbild Defekte an der Karosserie mittels eines vorzugsweise auf Template-Matching basierenden Bildverarbeitungsalgorithmus hinsichtlich Art und Größe klassifiziert werden.

7. Vorrichtung zur Vermessung von Karosserieschäden, insbesondere von Hagelschäden wie Dellen, Beulen und/oder Kratzer, an Kraftfahrzeugen, vorzugsweise zur Durchführung eines Verfahrens nach einem der Ansprüche 1 bis 6, mit einer Beleuchtungseinrichtung und einer Messeinrichtung, welche derart an einer ortsfesten Halteeinrichtung (1) angeordnet sind, dass eine Bewegung eines zu vermessenden Kraftfahrzeugs (5) relativ zu der Beleuchtungs- und Messeinrichtung ermöglicht ist,
wobei die Beleuchtungseinrichtung eine Beleuchtungsstruktur aus nebeneinander liegenden Lichtstreifen bzw. -linien auf der Fahrzeugkarosserie erzeugt, und
wobei die Messeinrichtung eine oder mehrere Flächenkameras (10) umfasst, die ausgelegt sind, durch deflektometrische Erfassung der von der Fahrzeugkarosserie reflektierten Beleuchtungsstruktur Oberflächenbilder der Fahrzeugkarosserie zu erstellen, in denen Defekte an der Karosserie mittels einer entsprechenden Auswerteeinrichtung identifizierbar sind,
**dadurch gekennzeichnet, dass** die Messeinrichtung zusätzlich eine oder mehrere 3D-Kameras (11) umfasst, die ausgelegt sind, mittels Abstandsbestimmungen die Form des Fahrzeugs widergebende Tiefenbilder derart zu erzeugen, dass mittels Projektion der Oberflächenbilder auf die Tiefenbilder eine Lokalisation der anhand der Oberflächenbilder identifizierten Defekte auf dem Fahrzeug (5) ermöglicht ist.

8. Vorrichtung nach Anspruch 7, wobei die Beleuchtungseinrichtung und die Messeinrichtung einer portalartigen bzw. torbogenförmigen Halteeinrichtung (1) zugeordnet sind, welche die Durchfahrt eines Kraftfahrzeugs (5) ermöglicht.

9. Vorrichtung nach Anspruch 7 oder 8, wobei die Anzahl der Flächenkameras (10) und der 3D-Kameras (11) sowie deren Anordnung an der Halteeinrichtung (1) so gewählt sind, dass die gesamte Fahrzeugkarosserie während einer Vorbei- bzw. Durchfahrt des Fahrzeugs (5) vermessbar ist.

10. Vorrichtung nach einem der Ansprüche 7 bis 9, wobei die Halteeinrichtung (1) modulartig aus einzelnen, vorzugsweise mittels eines Steck-, Schraub- und/oder Rastmechanismus miteinander verbindbaren Segmenten bzw. Modulen (8) aufgebaut ist.

11. Vorrichtung nach einem der Ansprüche 7 bis 10, weiterhin umfassend ein Messsystem (2) zur Positionsbestimmung eines zu vermessenden Kraftfahrzeugs (5) relativ zu der Messeinrichtung während der Durchfahrt des Kraftfahrzeugs (5) durch die Halteeinrichtung (1).

12. Vorrichtung nach Anspruch 11, wobei das Messsystem (2) zur Positionsbestimmung einen in einem überfahrbaren schwellenartigen Bodenelement (7) angeordneten Abstandssensor (6) aufweist, und/oder
wobei das Messsystem (2) zur Positionsbestimmung vier Kameras (12) aufweist, wobei auf jeder Seite eines zu vermessenden Kraftfahrzeugs (5) jeweils zwei Kameras (12) paarweise zusammenwirken und die beiden jeweiligen Fahrzeugräder detektieren und mittels Stereoskopie die 3D-Position aller detektieren Fahrzeugräder berechnen.

## Claims

1. Method for measuring body damage, in particular hail damage, such as dents, bumps and/or scratches, on motor vehicles, wherein a motor vehicle (5) which is intended to be measured is moved during the measurement relative to an illumination device and a measurement device which comprises one or more area cameras (10) which are arranged on a fixed retention device (1),
wherein by means of the illumination device an illumination structure comprising light strips or lines which are located beside each other is produced on the vehicle body,
wherein surface images of the vehicle body are produced by means of the one or more area cameras (10) by means of deflectometric detection of the illumination structure reflected by the vehicle body, and
wherein defects on the body are identified by means of a corresponding evaluation device (3) in the surface images, **characterised in that** the measurement device additionally comprises one or more 3D cameras arranged on the fixed retention device (1), wherein depth images which reproduce the shape of the vehicle are produced by means of the one or more 3D cameras (11) by means of distance determinations, and wherein by means of projection of the surface images on the depth images the identified defects on the vehicle (5) are located.

2. Method according to claim 1, wherein during the measurement of a motor vehicle (5) the position of the motor vehicle (5) is measured in the travel direction relative to the measurement device.

3. Method according to claim 1, wherein the recorded depth images taking into account the respective obtained position data of the motor vehicle (5) are combined in order to form a 3D model of the vehicle (5).

4. Method according to claim 3, wherein for each of the area cameras (10) a deformation image is produced by the surface images which are recorded in each case being displaced depending on the measured position of the vehicle (5) in each case and are then added together.

5. Method according to claim 4, wherein a 3D deformation image of the entire vehicle body is produced by the respective deformation images of the individual area camera (10) being combined using the 3D model of the vehicle (5).

6. Method according to claim 5, wherein in the 3D deformation image defects on the body are classified with regard to type and size by means of an image processing algorithm which is preferably based on template matching.

7. Apparatus for measuring body damage, in particular hail damage, such as dents, bumps and/or scratches, on motor vehicles, preferably for carrying out a method according to any one of claims 1 to 6, having an illumination device and a measurement device which are arranged on a fixed retention device (1) in such a manner that a movement of a motor vehicle (5) which is intended to be measured relative to the illumination and measurement device is enabled,
wherein the illumination device produces an illumination structure comprising light strips or lines which are located beside each other on the vehicle body, and
wherein the measurement device comprises one or more area cameras (10) which are configured to produce by means of deflectometric detection of the illumination structure reflected by the vehicle body surface images of the vehicle body, in which defects on the body can be identified by means of a corresponding evaluation device,
**characterised in that** the measurement device additionally comprises one or more 3D cameras (11) which are configured to produce by means of distance determinations depth images which reproduce the shape of the vehicle in such a manner that by means of projection of the surface images on the depth images a location of the defects which are identified with reference to the surface images on the vehicle (5) is enabled.

8. Apparatus according to claim 7, wherein the illumination device and the measurement device are associated with a portal-like or archway-like retention device (1) which enables the passage of a motor vehicle (5).

9. Apparatus according to claim 7 or 8, wherein the number of area cameras (10) and 3D cameras (11) and the arrangement thereof on the retention device (1) are selected in such a manner that the entire vehicle body can be measured while the vehicle (5) is passing by or passing through.

10. Apparatus according to any one of claims 7 to 9, wherein the retention device (1) is constructed in a modular manner from individual segments or modules (8) which can preferably be connected to each other by means of a plug, screw and/or locking mechanism.

11. Apparatus according to any one of claims 7 to 10, further comprising a measurement system (2) for determining the position of a motor vehicle (5) which is intended to be measured relative to the measurement device during the passage of the motor vehicle (5) through the retention device (1).

12. Apparatus according to claim 11, wherein the measurement system (2) for position determination has a distance sensor (6) which is arranged in a threshold-like base element (7) which can be driven over, and/or
wherein the measurement system (2) for position determination has four cameras (12), wherein at each side of a motor vehicle (5) which is intended to be measured two cameras (12) cooperate in pairs in each case and detect the two respective vehicle wheels and calculate by means of stereoscopy the 3D position of all the detected vehicle wheels.

## Revendications

1. Procédé de mesure de dommages de carrosserie, en particulier de dommages dus à la grêle tels que des creux, des bosses et/ou des rayures, sur des véhicules automobiles, dans lequel un véhicule automobile (5) à mesurer se déplace, pendant la mesure, par rapport à un dispositif d'éclairage et à un dispositif de mesure comprenant une ou plusieurs caméras de surface (10), lesquels sont disposés sur un support fixe (1),
dans lequel, au moyen du dispositif d'éclairage, une structure d'éclairage constituée de bandes ou lignes lumineuses juxtaposées est générée sur la carrosserie du véhicule,
dans lequel, au moyen de la ou des caméras de surface (10), des images de surface de la carrosserie du véhicule sont créées par détection déflectométrique de la structure d'éclairage réfléchie par la carrosserie du véhicule, et
dans lequel, au moyen d'un dispositif d'évaluation (3) correspondant, des défauts sur la carrosserie sont identifiés dans les images de surface,
**caractérisé en ce que** le dispositif de mesure comprend en outre une ou plusieurs caméras 3D (11) disposées sur le support fixe (1), dans lequel lesdites caméras 3D (11) génèrent, au moyen de déterminations de distance, des images de profondeur représentant la forme du véhicule, et
dans lequel, au moyen de la projection des images de surface sur les images de profondeur, les défauts identifiés sont localisés sur le véhicule (5).

2. Procédé selon la revendication 1, dans lequel, pendant la mesure d'un véhicule automobile (5), la position du véhicule automobile (5) dans le sens de la marche est mesurée par rapport au dispositif de mesure.

3. Procédé selon la revendication 1, dans lequel les images de profondeur enregistrées sont assemblées pour former un modèle 3D du véhicule (5) en tenant compte des données de position respectives obtenues du véhicule automobile (5).

4. Procédé selon la revendication 3, dans lequel, pour chacune des caméras de surface (10), une image de déformation est générée en décalant les images de surface respectivement enregistrées en fonction de la position mesurée du véhicule (5), puis en les additionnant.

5. Procédé selon la revendication 4, dans lequel une image de déformation 3D de l'ensemble de la carrosserie du véhicule est générée en assemblant les images de déformation respectives des caméras de surface individuelles (10) à l'aide du modèle 3D du véhicule (5).

6. Procédé selon la revendication 5, dans lequel les défauts sur la carrosserie sont classifiés, en termes de type et de taille, dans l'image de déformation 3D au moyen d'un algorithme de traitement d'image basé de préférence sur la comparaison de gabarits (template-matching).

7. Dispositif de mesure de dommages de carrosserie, en particulier de dommages dus à la grêle tels que des creux, des bosses et/ou des rayures, sur des véhicules automobiles, de préférence pour la mise en œuvre d'un procédé selon l'une des revendications 1 à 6, comprenant un dispositif d'éclairage et un dispositif de mesure, lesquels sont disposés sur un support fixe (1) de manière à permettre le mouvement d'un véhicule automobile (5) à mesurer par rapport au dispositif d'éclairage et au dispositif de mesure,
dans lequel le dispositif d'éclairage génère une structure d'éclairage constituée de bandes ou lignes lumineuses juxtaposées sur la carrosserie du véhicule, et
dans lequel le dispositif de mesure comprend une ou plusieurs caméras de surface (10), qui sont conçues pour créer des images de surface de la carrosserie du véhicule par détection déflectométrique de la structure d'éclairage réfléchie par la carrosserie du véhicule, dans lequel des défauts sur la carrosserie peuvent être identifiés au moyen d'un dispositif d'évaluation correspondant,
**caractérisé en ce que** le dispositif de mesure comprend en outre une ou plusieurs caméras 3D (11), qui sont conçues pour générer, au moyen de déterminations de distance, des images de profondeur représentant la forme du véhicule de manière à ce que la localisation des défauts identifiés sur le véhicule (5) à l'aide des images de surface soit rendue possible par la projection des images de surface sur les images de profondeur.

8. Dispositif selon la revendication 7, dans lequel le dispositif d'éclairage et le dispositif de mesure sont associés à un support (1) en forme de portique ou d'arc de porte, lequel permet le passage d'un véhicule automobile (5).

9. Dispositif selon la revendication 7 ou 8, dans lequel le nombre de caméras de surface (10) et de caméras 3D (11) ainsi que leur disposément sur le support fixe (1) sont choisis de manière à ce que l'ensemble de la carrosserie du véhicule puisse être mesuré pendant le passage ou le transit du véhicule (5).

10. Dispositif selon l'une des revendications 7 à 9, dans lequel le support fixe (1) est conçu de manière modulaire à partir de segments ou modules individuels (8) pouvant être connectés entre eux, de préférence au moyen d'un mécanisme d'enfichage, de vissage et/ou d'encliquetage.

11. Dispositif selon l'une des revendications 7 à 10, comprenant en outre un système de mesure (2) pour la détermination de la position d'un véhicule automobile (5) à mesurer par rapport au dispositif de mesure pendant le passage du véhicule automobile (5) à travers le support fixe (1).

12. Dispositif selon la revendication 11, dans lequel le système de mesure (2) pour la détermination de position comprend un capteur de distance (6) disposé dans un élément de sol (7) de type seuil praticable, et/ou
dans lequel le système de mesure (2) pour la détermination de position comprend quatre caméras (12), dans lequel deux caméras (12) interagissent par paires de chaque côté d'un véhicule automobile (5) à mesurer et détectent les deux roues de véhicule respectives et calculent la position 3D de toutes les roues de véhicule détectées par stéréoscopie.
